(19) Europäisches Patentamt
European Patent Office
Office européen des brevets

(11) **EP 3 469 645 B1**

(12) **FASCICULE DE BREVET EUROPEEN**

(45) Date de publication et mention
de la délivrance du brevet:
**05.08.2020 Bulletin 2020/32**

(21) Numéro de dépôt: **17734787.9**

(22) Date de dépôt: **07.06.2017**

(51) Int Cl.:
*H01M 4/38* *(2006.01)*      *H01M 4/58* *(2010.01)*
*H01M 10/04* *(2006.01)*      *H01M 10/052* *(2010.01)*
*H01M 10/0565* *(2010.01)*

(86) Numéro de dépôt international:
**PCT/FR2017/051433**

(87) Numéro de publication internationale:
**WO 2017/212171 (14.12.2017 Gazette 2017/50)**

(54) **PROCEDE DE TRAITEMENT THERMIQUE D'UNE BATTERIE AU LITHIUM**

VERFAHREN ZUR THERMISCHEN BEHANDLUNG EINER LITHIUMBATTERIE

METHOD FOR THERMALLY TREATING A LITHIUM BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2016 FR 1655239**

(43) Date de publication de la demande:
**17.04.2019 Bulletin 2019/16**

(73) Titulaire: **Blue Solutions**
**29500 Ergué Gabéric (FR)**

(72) Inventeurs:
• **LECUYER, Margaud**
**29760 Penmarc'h (FR)**
• **BODENEZ, Vincent**
**29000 Quimper (FR)**
• **BERNARDO, Philippe**
**29000 Quimper (FR)**
• **DRU, Mathieu**
**29510 Briec (FR)**
• **DESCHAMPS, Marc**
**29000 Quimper (FR)**

(74) Mandataire: **Goulard, Sophie et al**
**Ipsilon**
**Le Centralis**
**63, avenue du Général Leclerc**
**92340 Bourg-la-Reine (FR)**

(56) Documents cités:
JP-A- 2013 097 993      US-A1- 2002 164 531
US-A1- 2004 023 114      US-A1- 2004 229 118
US-A1- 2005 000 086      US-A1- 2015 270 523
US-A1- 2015 311 490

EP 3 469 645 B1

**Description**

La présente invention est relative au domaine des batteries au lithium, en particulier des batteries Lithium-Métal-Polymère (LMP) et des batteries Lithium-ion polymère (Li-Po).

De façon plus précise, l'invention se rapporte à un procédé de traitement thermique d'une batterie au lithium pour en optimiser les performances, aussi bien en début de vie de la batterie qu'à plus long terme.

Les batteries au lithium sont particulièrement destinées aux véhicules automobiles ainsi qu'au stockage stationnaire de l'énergie électrique.

Les batteries LMP se présentent généralement sous forme d'un assemblage de films minces superposés (enroulement ou empilement du motif suivant {électrolyte / cathode / collecteur / cathode / électrolyte / anode} sur n tours) ou de n films minces empilés (coupés et superposés, soit n empilements du motif pré-cité). Ce motif unitaire empilé / complexé a une épaisseur de l'ordre d'une centaine de micromètres. Quatre feuilles fonctionnelles entrent dans sa composition : i) une électrode négative (anode) assurant la fourniture des ions lithium lors de la décharge de la batterie, ii) un électrolyte polymère solide conducteur des ions lithium, iii) une électrode positive (cathode) composée d'un matériau actif d'électrode agissant comme un réceptacle où les ions lithium viennent s'intercaler, et enfin iv) un collecteur de courant en contact avec l'électrode positive et permettant d'assurer la connexion électrique.

L'électrode négative des batterie LMP est généralement constituée d'une feuille de lithium métallique ou d'un alliage de lithium ; l'électrolyte polymère solide est généralement composé d'un polymère à base de poly(oxyde d'éthylène) (POE) et d'au moins un sel de lithium ; l'électrode positive est habituellement un matériau dont le potentiel de travail est inférieur à 4V vs $Li^+/Li$ (i.e. le potentiel d'insertion/désinsertion du lithium est inférieur à 4V) tel que par exemple un oxyde de métal (comme par exemple $V_2O_5$, $LiV_3O_8$, $LiCoO_2$, $LiNiO_2$, $LiMn_2O_4$ et $LiNi_{0.5}Mn_{0.5}O_2$...) ou un phosphate de type $LiMPO_4$, où M représente un cation métal sélectionné parmi le groupe Fe, Mn, Co, Ni et Ti, ou des combinaisons de ces cations, comme par exemple $LiFePO_4$, et contient également du carbone et un polymère ; et le collecteur de courant est généralement constitué d'une feuille de métal. La conductivité des ions est assurée par la dissolution du sel de lithium dans le polymère entrant dans la composition de l'électrolyte solide.

Les batteries Li-Po sont généralement constituées d'une électrode positive du même type que celle des batteries LMP, d'un électrolyte polymère gélifié comprenant un polymère et un sel de lithium en solution dans un solvant, et d'une électrode négative en un matériau carboné tel que le graphite.

Les batteries au lithium, et particulièrement les batteries LMP, présentent un certain nombre d'avantages.

En premier lieu, la densité massique des batteries LMP est de l'ordre de 120 à 180 Wh/kg soit une densité d'énergie au minimum 2,5 fois plus élevée que les batteries au plomb de voiture thermique (30-50 Wh/kg). Les batteries LMP n'ont par ailleurs pas d'effet mémoire et il est donc inutile de les décharger complètement avant de les recharger, comme dans les cas de certaines autres technologies (Ni-Cd). Enfin, avec une tension identique à celles de batteries au Lithium-ion (de l'ordre de 3,4 V), les batteries LMP ne demandent aucun entretien et ont une durée de vie de près de 10 ans, ce qui est intéressant d'un point de vue commercial et qui les rend pertinentes pour des applications nécessitant des tractions électriques.

Les batteries LMP présentent néanmoins également certains inconvénients. En effet, pour les utiliser, elles doivent être maintenues à une température d'environ 60-80°C, ce qui impose quasiment de les maintenir en charge en laissant le véhicule branché sur le secteur quand il ne roule pas. A défaut, les batteries LMP se vident en quelques jours de par leur maintien en température.

La résistance interne des batteries au lithium, en particulier des batteries LMP, également dénommée impédance interne, provoque une chute de tension en décharge et induit une limitation des performances en termes de puissance ou d'auto-échauffement. La résistance interne d'une batterie est définie comme l'opposition à la circulation du courant dans une batterie. Il y a deux composantes essentielles pour cette résistance : la résistance électronique et la résistance ionique. Leur effet combiné est dénommé la résistance effective totale. La résistance électronique englobe la résistivité des matériaux utilisés tels que le métal de couverture et les composants internes mais aussi les résistances parasites liées aux différentes connectiques composant la batterie. La résistance ionique est l'opposition au passage du courant dans la batterie due à des facteurs divers tels que la conductivité ionique de l'électrolyte et des électrodes ainsi que la qualité des interfaces.

La résistance interne est généralement faible en début de vie de la batterie mais a tendance à augmenter au cours de la durée de vie de la batterie, ce qui a pour conséquence de diminuer progressivement ses performances au fur et à mesure des nombreux cycles de charge et de décharge, jusqu'à atteindre une valeur trop élevée pour lui permettre de continuer à être utilisée pour les besoins pour lesquels elle a été initialement conçue. En général, plus la résistance interne initiale d'une batterie est élevée, plus ses performances seront limitées.

La résistance interne initiale d'une batterie peut être minimisée grâce au choix des matières premières entrant dans la composition des électrodes ainsi que par l'amélioration de la qualité de l'assemblage.

Il a par exemple déjà été proposé, notamment dans la demande de brevet US 2014/0197799, un procédé pour diminuer la résistance interne initiale d'une batterie LMP consistant à effectuer une surdécharge de ladite batterie, c'est-à-dire à décharger la batterie au-delà de 100 % de sa capacité nominale, et ce pendant une durée suffisante pour diminuer sa résistance interne. Plus précisément, le procédé consiste à surdécharger la batterie LMP jusqu'à ce qu'elle atteigne une tension comprise entre 0,5V et 2,0V (second plateau), puis à recharger ladite batterie jusqu'à sa capacité maximale à une tension de 3,6V. Il est indiqué que ce procédé permet de diminuer d'environ 40 % la résistance interne d'une batterie LMP. Cependant, ce procédé ne donne pas entière satisfaction dans la mesure où la diminution de la résistance interne n'est pas forcément homogène. Ce procédé peut en effet conduire à des différences de résistivité entre différentes zones de la batterie, la surdécharge appliquée par ce traitement n'étant pas forcément répercutée avec la même intensité dans l'ensemble des éléments constituant la batterie. Ainsi, ce procédé n'est réellement efficace que pour des batteries dans lesquelles la matière active est connectée de façon isotrope au sein de l'électrode au moment où est effectuée la surdécharge.

US 2005/000086 A1, US 2004/229118 A1, US 2002/164531 A1, US 2015/311490 A1, US 2015/270523 A1, US 2004/023114 A1 et JP 2013 097993 A présentent des procédés de traitement thermique d'une batterie Lithium-ion polymère consistant à l'application d'une température et d'une pression. Ils ne suggèrent pas de réaliser le traitement thermique sous tension ni de placer la batterie en maintien potentiostatique à une tension correspondant à l'état de charge initial de la batterie après son assemblage plus ou moins 10 % pour améliorer les performances de la batterie.

Il existe donc un besoin pour un procédé permettant de palier les inconvénients des procédés de l'art antérieur, et en particulier pour un procédé permettant de diminuer significativement et durablement la résistance interne (impédance interne) des batteries au lithium, en particulier des batteries LMP et Li-Po, aussi bien en début de vie qu'à long terme, ce procédé étant applicable à tout type de batteries LMP ou Li-Po, et notamment aux batteries LMP et Li-Po dans lesquelles la nature de la matière active d'électrode positive n'est pas limitée, en particulier aux batteries dans lesquelles la connexion de la matière active d'électrode positive est anisotrope.

Ce but est atteint par le procédé qui fait l'objet de la présente invention et qui va être décrit ci-après.

La présente invention a donc pour objet un procédé de traitement thermique d'une batterie au lithium choisie parmi les batteries Lithium-Métal-Polymère et les batteries Lithium-ion polymère, ladite batterie comportant au moins une électrode positive, au moins un électrolyte polymère et au moins une électrode négative, ledit procédé étant caractérisé en ce qu'il comprend :

1) au moins une première étape consistant à porter ladite batterie à une température T1 d'au moins 50°C,
2) au moins une deuxième étape au cours de laquelle on maintient ladite batterie à la température T1 tout en appliquant une pression d'au moins 0,5 bar, la durée de ladite étape 2) étant de 5 heures à 1 semaine, ladite étape 2) étant réalisée sous tension et la batterie étant placée en maintien potentiostatique à une tension correspondant à l'état de charge initial de la batterie après son assemblage plus ou moins 10%,

lesdites étapes 1) et 2) étant réalisées avant la première charge de ladite batterie.

Le procédé conforme à la présente invention permet d'améliorer les performances des batteries LMP et Li-Po. Il est tout particulièrement adapté aux batteries LMP, et conduit notamment :

- à une diminution de la résistance interne de la batterie LMP,

- à une amélioration de ses performances en puissance,

- à une augmentation de l'énergie,

- à un abaissement des phénomènes d'activation en début de vie,

- à une durée de vie améliorée.

Selon l'invention, on entend par « diminuer de façon significative la résistance interne », une diminution de la résistance interne de la batterie à l'issue de l'étape 2) d'au moins 2 % par rapport à la résistance interne initiale, c'est-à-dire la résistance interne de la batterie mesurée avant le début de l'étape 1) du procédé conforme à l'invention.

Ces avantages résultent des effets du traitement thermique du procédé conforme à l'invention, qui engendre notamment une optimisation des interfaces entre les différentes couches de la batterie et par conséquent une uniformisation des propriétés de connexion des grains de matière active et à une homogénéisation de la résistivité entre les différentes zones de la batterie. Comme indiqué ci-dessus, les étapes 1) et 2) sont réalisées avant la première charge de ladite batterie, c'est-à-dire, directement après l'assemblage de l'électrode positive avec l'électrolyte polymère et l'électrode négative.

La température T1 est de préférence de 50 à 120°C environ, et encore plus préférentiellement de 70 à 105°C environ.

La batterie peut être portée à la température T1 désirée par exemple à l'aide de ses propres organes de chauffe ou par stockage à chaud.

Lors de l'étape 2), la pression appliquée à la batterie est de préférence de 0,5 à 10 bars environ, et encore plus préférentiellement de 1 à 7 bars environ.

La pression désirée peut par exemple être appliquée à la batterie à l'aide de ressorts.

L'étape 2) est conduite pendant une durée suffisante pour diminuer de façon significative la résistance interne de la batterie LMP.

Selon l'invention, la durée de l'étape 2) est de préférence de 5 à 72 heures environ, et encore plus préférentiellement de 5 à 25 heures environ.

La résistance interne de la batterie avant et après application du procédé conforme à l'invention peut être mesurée en appliquant aux bornes de la batterie, une tension alternative de fréquence et d'amplitude connues et en mesurant la tension et le courant alternatif résultant. La résistance interne ou impédance interne (Ri) peut par exemple être calculée grâce à la loi d'Ohm selon l'équation (1) ci-dessous :

$$Ri = \frac{\Delta U}{\Delta I} \qquad (1)$$

dans laquelle :

- $\Delta U$ est la variation du potentiel entre l'état de repos et l'état sous courant et

- $\Delta I$ est la variation du courant imposé en début de décharge.

Ainsi, les mesures et valeurs de résistance interne auxquelles il est fait référence dans la présente demande ont été déterminées selon la méthode indiquée ci-dessous, et ce dans les conditions suivantes : la batterie est soumise à un courant de charge de 8A pendant 30 sec puis laissée au repos. La différence de tension sous courant par rapport à la tension mesurée au repos permet ainsi, via la loi d'Ohm, de calculer la valeur de résistance interne.

Ces mesures n'affectent pas les performances de la batterie. Elles peuvent être effectuées lorsque la batterie est en cours d'utilisation ou être utilisées pour surveiller en permanence l'évolution de la résistance interne, et donc des performances de la batterie au cours des différents cycles de charge/décharge.

Selon l'invention, l'étape 2) est réalisée sous tension, la batterie est placée en maintien potentiostatique à une tension correspondant à l'état de charge initial de ladite batterie après son assemblage, plus ou moins 10%, et de préférence, plus ou moins 2%.

Selon l'invention, on entend par « batterie déchargée », une batterie qui est déchargée à plus de 90 % de sa capacité nominale, et de préférence à plus de 98%.

A la fin de l'étape 2), la batterie peut être utilisée de façon nominale.

Selon une forme de réalisation particulière de l'invention, il est possible de faire suivre les étapes 1) et 2) du procédé par une étape supplémentaire de surdécharge de la batterie.

Ainsi, selon cette forme de réalisation, le procédé conforme à l'invention comprend en outre une étape 3) de surdécharge de ladite batterie LMP. Bien que non obligatoire, cette étape de surdécharge supplémentaire permet d'accentuer encore la baisse de la résistance interne de la batterie au lithium obtenue à l'issue des étapes 1) et 2) du procédé conforme à l'invention, tout particulièrement dans le cas des batteries LMP.

Lorsqu'elle est réalisée, l'étape 3) de surdécharge de la batterie au lithium est de préférence conduite jusqu'à ce que la batterie soit déchargée au-delà de 100% de sa capacité nominale, en particulier jusqu'à ce que la batterie soit sur-déchargée de 2 à 40 % environ de sa capacité nominale, et encore plus préférentiellement de 8 à 20% de sa capacité nominale.

L'étape 3) de surdécharge peut, par exemple, être réalisée en appliquant à la batterie un courant de surdécharge à une intensité correspondant à un régime de décharge allant de C/200 à C/10 environ.

Le procédé conforme à l'invention peut être appliqué à tout type de batterie au lithium choisie parmi les batteries LMP et les batteries Li-Po, et ce quelle que soit la nature de la matière active entrant dans la composition du matériau d'électrode positive. Elle est cependant particulièrement adaptée aux batteries LMP, tout particulièrement aux batteries LMP dans lesquelles la matière active de l'électrode positive est choisie parmi le phosphate de fer et ses dérivés, en particulier $LiFePO_4$.

Ainsi, selon une forme de réalisation particulière et préférée du procédé conforme à l'invention, la batterie est une batterie Lithium Métal Polymère contenant comme matériau d'électrode positive du phosphate de fer $LiFePO_4$.

La présente invention est illustrée par les exemples de réalisation suivants, auxquels elle n'est cependant pas limitée.

## EXEMPLES

### EXEMPLE 1 : Préparation d'une cellule unitaire d'une batterie

LMP et mise en évidence de l'effet du traitement thermique selon un procédé non conforme à l'invention sur ses propriétés physiques et électriques

Dans cet exemple, on a étudié l'effet du traitement thermique sur différentes propriétés d'une cellule unitaire d'une batterie LMP :

- son épaisseur,
- sa résistance interne en début de vie, avec ou sans étape 3) de surdécharge,
- son profil de décharge,
- sa capacité en début de vie.

On a préparé des cellules unitaires de batterie LMP. Chacune des cellules unitaires était constituée de la superposition de 38 couches contenant chacune :

- un feuillard de lithium métallique (fournisseur Gangfeng),
- 2 films d'électrolyte polymère, de part et d'autre de l'électrode positive,
- un film d'électrode positive, lui-même constitué d'un collecteur de courant en aluminium revêtu de carbone sur lequel a été laminé, de chaque côté, un matériau d'électrode positive.

L'électrolyte polymère a été obtenu par extrusion d'un mélange de polymères (polyoxyde d'éthylène (POE) (Zeospan), copolymère poly(fluorure de vinylidène co-hexafluoropropylène) (PVDF-HFP) (Solvay), sel de lithium (lithium bis(tetrafluorosulfonyl imide), LiTFSI, 3M) en proportions massiques 48/40/12.

Le matériau d'électrode positive a été obtenu par extrusion et laminage d'un mélange de phosphate de fer lithié (LiFePO$_4$) (Pulead, sauf mention contraire), d'un copolymère d'oxyde d'éthylène et d'oxyde de butylène P(OE-OB) (Nippon Shokubai), et de LiTFSI (3M) en proportions massiques 68/24/6, et de carbone (Ketjen black) 2%, de part et d'autre d'un collecteur de courant en aluminium revêtu d'une couche de protection carbonée (ARMOR).

Puis, chacune des cellules unitaires a été obtenue par juxtaposition de chacun des films obtenus précédemment.

Les mesures de la résistance interne des cellules testées dans cet exemple ont été effectuées en début de décharge pendant le cyclage, en appliquant le calcul suivant : $Ri = \frac{\Delta U}{\Delta I}$ avec $\Delta U$ la variation de potentiel entre l'état de repos et l'état sous courant et $\Delta I$ la variation du courant imposé en début de décharge.

### 1.1 Mesures de l'effet du traitement thermique sur l'épaisseur de la cellule

L'épaisseur de la cellule unitaire non cyclée a été mesurée avant et après un cycle thermique comprenant les 3 étapes suivantes :

1) une montée en température, depuis la température ambiante jusqu'à 80°C,

2) le maintien à la température de 80°C pendant 48 heures, la cellule étant également soumise à une pression de 2 bars,

3) le refroidissement naturel de la cellule jusqu'à la température ambiante.

Une compression de l'épaisseur de la cellule de 140 $\mu$m a été observée à la fin du cycle thermique. La cellule étant dans le même état de charge et à la même température qu'à l'état initial, c'est-à-dire avant réalisation du cycle thermique, cette variation d'épaisseur est attribuée à une optimisation des interfaces lors de ce traitement thermique.

### 1.2. Effets du traitement thermique sur l'évolution de la résistance interne en début de vie sans étape de surdécharge

Deux cellules unitaires de composition identique et telle que décrite ci-dessus ont été mises en chauffe jusqu'à atteindre une température de 80°C.

L'une de ces deux cellules a ensuite été immédiatement lancée en cyclage (Cyclage C/8 D/2) (Cellule **C'1** comparative, procédé non conforme à l'invention), tandis que l'autre cellule a subi préalablement une étape de maintien à 80°C pendant 72 heures, sous une pression de 2 bars, selon le procédé non conforme à l'invention (Cellule **C1** non conforme à l'invention).

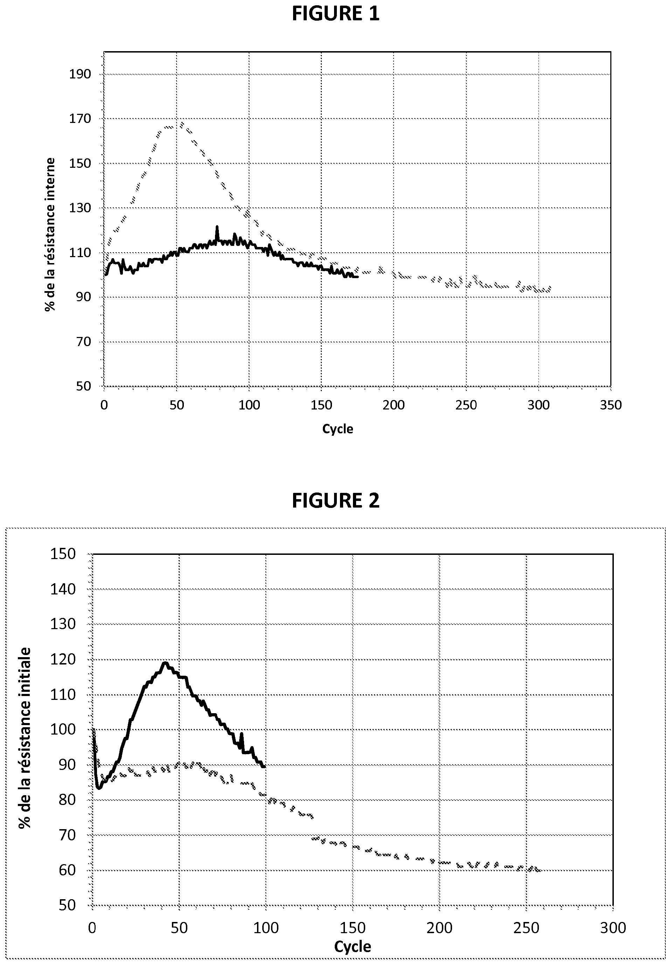

La figure 1 annexée présente l'évolution de la résistance interne (en %) de chacune des cellules en fonction du nombre de cycles. Sur cette figure, l'évolution de la résistance interne de la cellule **C'1** non conforme à l'invention correspond à la courbe en trait discontinu et celle de la cellule **C1** conforme à l'invention correspond à la courbe en trait continu.

Ces résultats montrent que le traitement thermique permet de stabiliser la résistance interne de la cellule **C1** en cours de cyclage (augmentation de 15 % environ seulement au cours des 100 premiers cycles) par rapport à celle de la cellule **C'1** qui subit au contraire une augmentation d'environ 70 % de sa résistance interne en cours des 100 premiers cycles. Le traitement thermique permet donc d'améliorer la répétabilité du comportement de la cellule au cours de sa vie tout en minimisant l'augmentation de la résistance interne au cours du cyclage.

1.3. Effets du traitement thermique avec étape de surdécharge sur l'évolution de la résistance interne en début de vie et de la capacité

Deux cellules unitaires de composition identique et telle que décrite ci-dessus ont été mises en chauffe jusqu'à atteindre une température de 80°C.

L'une des deux cellules a ensuite subi une étape de surdécharge à 3A pendant une durée de 3h20 puis mise à cycler (C/8 D/2) (Cellule **C'2** obtenue selon un procédé non conforme à l'invention).

L'autre cellule a d'abord subi une étape de maintien à une température de 80°C pendant 72 heures et sous une pression de 2 bars, avant de subir à son tour une étape de surdécharge à 3A pendant une durée de 3h20 puis un cyclage (C/8 D/2) (Cellule **C2** obtenue selon le procédé non conforme à l'invention).

La figure 2 annexée présente l'évolution de la résistance interne (en %) de chacune des cellules en fonction du nombre de cycles. Sur cette figure, l'évolution de la résistance interne de la cellule **C'2** non conforme à l'invention correspond à la courbe haute et celle de la cellule **C2** non conforme à l'invention correspond à la courbe basse.

Ces résultats montrent que l'étape de traitement thermique selon le procédé permet de fortement limiter l'augmentation de la résistance interne observée au cours des 40 premiers cycles de la cellule **C2.**

De plus, on observe que la résistance interne de la cellule **C2** est inférieure à celle de la cellule **C1** ayant subi un traitement thermique mais n'ayant pas subi l'étape optionnelle de surdécharge (cf. figure 1). Ces résultats confirment que l'étape de surdécharge, bien qu'optionnelle, permet d'améliorer encore plus les propriétés de la cellule, notamment en diminuant la résistance interne de la batterie en début de vie.

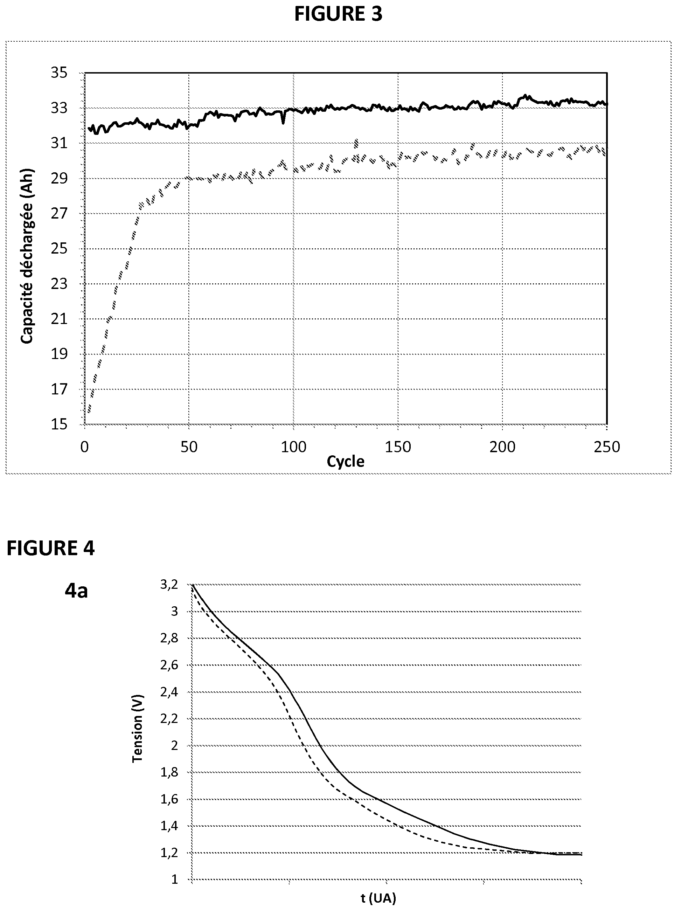

Par ailleurs, la figure 3 annexée donne les résultats de l'évolution de la capacité obtenue à D/2, des deux cellules **C'2** et **C2** en fonction du nombre de cycles. Sur cette figure, la capacité déchargée (en Ah) est fonction du nombre de cycles ; la courbe haute correspond à la cellule **C2** ayant subi le procédé de traitement non conforme à l'invention alors que la courbe basse correspond à la cellule **C'2** n'ayant pas subi un tel traitement.

Les résultats présentés sur la figure 3 montrent que le traitement thermique préalable à la surdécharge sur la cellule C2 permet d'atteindre dès les premiers cycles, les performances optimales de la cellule.

**EXEMPLE 2 : Préparation d'une batterie LMP composée de plusieurs cellules unitaires et mise en évidence de l'effet du traitement thermique non conforme à l'invention sur ses propriétés physiques et électriques**

Dans cet exemple, on a évalué l'impact d'un traitement thermique selon le procédé non conforme à l'invention sur les performances d'une batterie LMP composée de 120 cellules unitaires montées en série (« *Pack* »). Chaque cellule unitaire (ou module) composant la batterie LMP avait la même composition que celle des cellules unitaires utilisées ci-dessus dans les tests présentés dans l'exemple 1.

Deux protocoles ont été appliqués sur 2 batteries identiques :

Protocole 1 non conforme à l'invention :

- Chauffe de la batterie de la température ambiante jusqu'à 80°C,

- Traitement thermique : régulation et maintien à 86°C pendant 18h, et sous une pression de 2 bars pour chacune des cellules,

- Surdécharge à 3A.

On a ainsi obtenu une batterie LMP1.

Protocole 2 NON conforme à l'invention :

- Chauffe de la batterie de la température ambiante jusqu'à 80°C,

- Surdécharge à 3A.

On a ainsi obtenu une batterie LMP2 non conforme à la présente invention.
Les performances de chacune des batteries LMP1 et LMP2 ont été caractérisées par un cycle de décharge (D/4) et de charge (C/10).
Les gains en énergie, en résistance Max/module et en résistance totale (Pack) pour la batterie LMP1 non conforme à l'invention ont été calculés par rapport aux valeurs mesurées pour chacun de ces paramètres sur la batterie LMP2 non conforme à l'invention.
Les résultats obtenus sont donnés dans le tableau 1 ci-après :

**TABLEAU 1**

| Batterie | Gain en énergie | Gain en résistance Max/ module | Gain en résistance pack |
|---|---|---|---|
| LMP1 | + 8% | - 4 % | - 3 % |

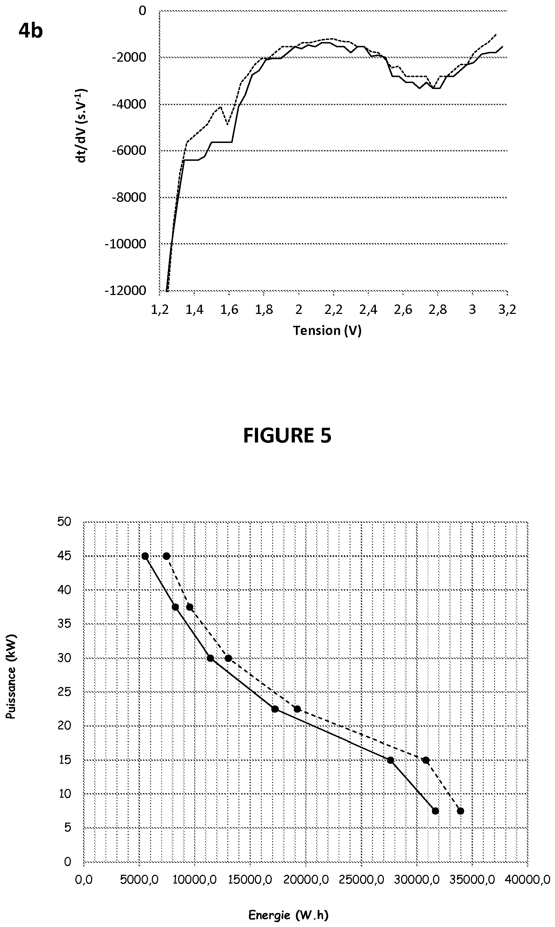

L' étape de maintien de la batterie à la température de 86°C pendant 18 heures, permet à la fois un gain en énergie et une baisse de la résistance interne, et ce aussi bien au niveau d'une cellule unitaire composant la batterie qu'au niveau de la batterie entière.
Le profil de tension de la surdécharge de chacune des batteries LMP1 et LMP2 est représenté sur la figure 4 annexée. Sur la figure 4a, la tension (en V) est fonction du temps (t en Unités Arbitraire : UA) et sur la figure 4b la dérivée du profil de la figure 4a dt/dV (en $s.V^{-1}$) est fonction de la tension (en V). Sur les figures 4a et 4b, les courbes en trait discontinu correspondent aux résultats de la batterie LMP1 non conforme à l'invention, tandis que les courbes en trait continu correspondent aux résultats de la batterie LMP2 non conforme à l'invention.
Les résultats présentés sur la figure 4 montrent que les différents épaulements sont plus marqués pour la batterie LMP2 n'ayant pas subi de traitement thermique que la batterie LMP1 a subi. Ceci est d'autant plus visible en dérivant la courbe au niveau de l'épaulement situé vers 1,4 V.
La figure 5 annexée présente le diagramme de Ragone des batteries LMP1 et LMP2. Sur ce diagramme, la puissance (en kW) est fonction de l'énergie (en W.h). Sur cette figure, la courbe en trait discontinu correspond à la batterie LMP1 non conforme à l'invention et la courbe en trait continu correspond à la batterie LMP2 non conforme à l'invention.
La même expérience a été réalisée sur une batterie strictement identique, mais en effectuant le traitement thermique à une température de 70°C pendant 18 heures au lieu de 86°C. On a obtenu une batterie LMP1' également non conforme à l'invention.

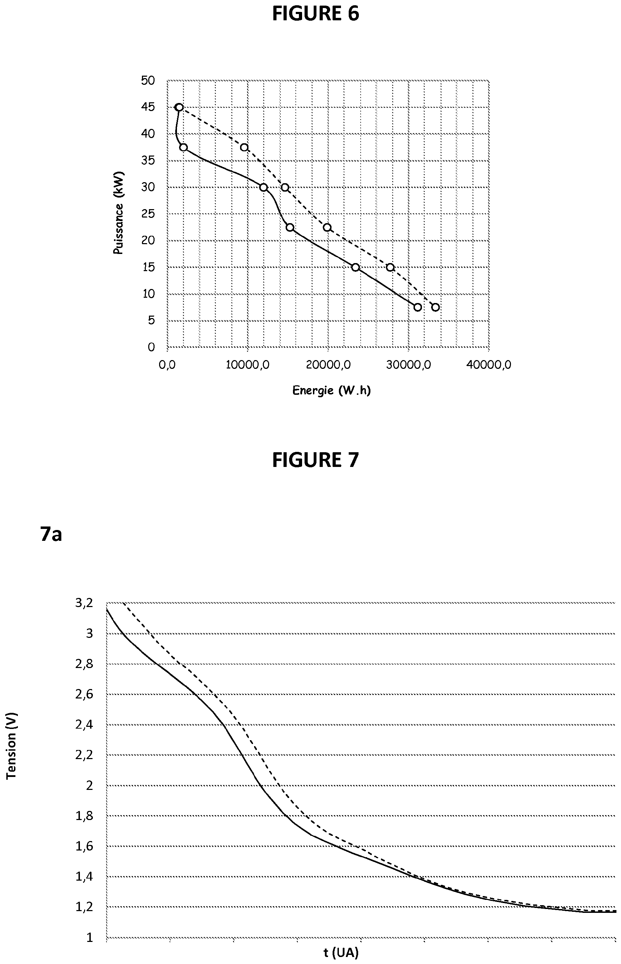

La figure 6 annexée présente le diagramme de Ragone des batteries LMP1' et LMP2. Sur ce diagramme, la puissance (en kW) est fonction de l'énergie (en W.h). Sur cette figure, la courbe en trait discontinu correspond à la batterie LMP1' non conforme à l'invention et la courbe en trait continu correspond à la batterie LMP2 non conforme à l'invention.
Les diagrammes de Ragone des figures 5 et 6 révèlent que le traitement thermique selon le procédé non conforme à l'invention est bénéfique à tous les régimes de décharge. Les différences entre la batterie ayant subi ou non un protocole de traitement thermique selon le procédé non conforme à l'invention sont d'autant plus marquées que la température est basse (cf. figure 6).

**EXEMPLE 3 : Préparation d'une batterie LMP composée de plusieurs cellules unitaires et mise en évidence de l'effet du traitement thermique selon le procédé de l'invention sur ses propriétés physiques et électriques**

Dans cet exemple, on a évalué l'impact d'un traitement thermique sous tension selon le procédé conforme à l'invention sur les performances d'une batterie LMP composée de 120 cellules unitaires montées en série (« *Pack* »). Chaque cellule unitaire (ou module) composant la batterie LMP avait la même composition que celle des cellules unitaires utilisées ci-dessus dans les tests présentés dans l'exemple 1.

Deux protocoles ont été appliqués sur 2 batteries identiques :

Protocole 3 conforme à l'invention :

- Chauffe de la batterie de la température ambiante jusqu'à 80°C,

- Traitement thermique : Maintien potentiostatique à 3,3V pendant 15 heures avec régulation de la température à 80°C, sous une pression de 2 bars sur chaque cellule,

- Surdécharge à 3A.

On a ainsi obtenu une batterie LMP3 conforme à la présente invention.

Protocole 4 NON conforme à l'invention :

- Chauffe de la batterie de la température ambiante jusqu'à 80°C,

- Surdécharge à 3A.

On a ainsi obtenu une batterie LMP4 non conforme à la présente invention.
Les performances de chacune des batteries LMP3 et LMP4 ont été caractérisées par un cycle de décharge (D/4) et de charge (C/10).
Les gains en énergie, en résistance Max/module et en résistance totale (Pack) pour la batterie LMP3 conforme à l'invention ont été calculés par rapport aux valeurs mesurées pour chacun de ces paramètres sur la batterie LMP4 non conforme à l'invention.
Les résultats obtenus sont donnés dans le tableau 2 ci-après :

**TABLEAU 2**

| Batterie | Gain en énergie | Gain en résistance Max/ module | Gain en résistance pack |
|---|---|---|---|
| LMP3 | + 15% | - 2 % | - 3 % |

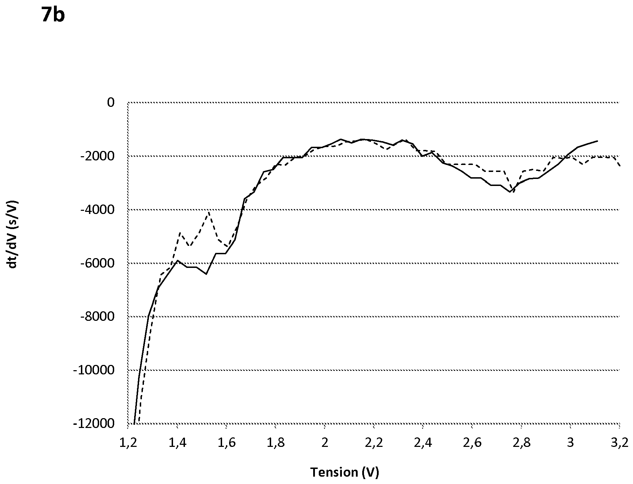

Ces résultats montrent que le traitement thermique de la batterie effectuée lorsque celle-ci est sous tension permet également d'atteindre une amélioration significative des performances de la batterie.
Le profil de tension de la surdécharge de chacune des batteries LMP3 et LMP4 est représenté sur la figure 7 annexée. Sur la figure 7a, la tension (en V) est fonction du temps (t en UA) et sur la figure 7b la dérivée du profil de la figure 7a dt/dV (en s.V$^{-1}$) est fonction de la tension (en V). Sur les figures 7a et 7b, les courbes en trait discontinu correspondent aux résultats de la batterie LMP3 conforme à l'invention tandis que les courbes en trait continu correspondent aux résultats de la batterie LMP4 non conforme à l'invention.
Les résultats présentés sur la figure 7 montrent que les différents épaulements sont plus marqués pour la batterie LMP4 n'ayant pas subi de traitement thermique sous tension selon le procédé de l'invention que pour la batterie LMP3 l'ayant subi. Ceci est d'autant plus visible en dérivant la courbe au niveau de l'épaulement situé vers 1,4 V.

**Revendications**

**1.** Procédé de traitement thermique d'une batterie au lithium choisie parmi les batteries Lithium-Métal-Polymère (LMP) et les batteries Lithium-ion polymère, ladite batterie comportant au moins une électrode positive, au moins un électrolyte polymère et au moins une électrode négative, ledit procédé étant **caractérisé en ce qu'**il comprend :

1) au moins une première étape consistant à porter ladite batterie à une température T1 d'au moins 50°C,
2) au moins une deuxième étape au cours de laquelle on maintient ladite batterie à la température T1 tout en appliquant une pression d'au moins 0,5 bar, la durée de ladite étape 2) étant de 5 heures à 1 semaine, ladite étape 2) étant réalisée sous tension et la batterie étant placée en maintien potentiostatique à une tension correspondant à l'état de charge initial de la batterie après son assemblage plus ou moins 10 %,

lesdites étapes 1) et 2) étant réalisées avant la première charge de ladite batterie.

2. Procédé selon la revendication 1, **caractérisé en ce que** la température T1 est de 50 à 120°C.

3. Procédé selon la revendication 1 ou 2, **caractérisé en ce que** la température T1 est de 70 à 105°C.

4. Procédé selon l'une quelconque des revendications précédentes, **caractérisé en ce que** lors de l'étape 2), la pression appliquée à la batterie est de 0,5 à 10 bars.

5. Procédé selon l'une quelconque des revendications précédentes, **caractérisé en ce que** lors de l'étape 2), la pression appliquée à la batterie est de 1 à 7 bars.

6. Procédé selon l'une quelconque des revendications précédentes, **caractérisé en ce que** la durée de l'étape 2) est de 5 à 72 heures.

7. Procédé selon l'une quelconque des revendications précédentes, **caractérisé en ce que** la durée de l'étape 2) est de 5 à 25 heures.

8. Procédé selon l'une quelconque des revendications précédentes, **caractérisé en ce que** la batterie est placée en maintien potentiostatique à une tension correspondant à l'état de charge initial de ladite batterie après son assemblage plus ou moins 2 %.

9. Procédé selon l'une quelconque des revendications précédentes, **caractérisé en ce qu'**il comprend en outre une étape 3) de surdécharge de ladite batterie.

10. Procédé selon la revendication 9, **caractérisé en ce qu'**il est appliqué à une batterie LMP.

11. Procédé selon la revendication 9 ou 10, **caractérisé en ce que** l'étape 3) de surdécharge de la batterie est conduite jusqu'à ce que la batterie soit sur-déchargée de 2 à 40 % de sa capacité nominale.

12. Procédé selon l'une quelconque des revendications 9 à 11, **caractérisé en ce que** l'étape 3) de surdécharge de la batterie est conduite jusqu'à ce que la batterie soit sur-déchargée de 8 à 20 % de sa capacité nominale.

13. Procédé selon l'une quelconque des revendications 9 à 12, **caractérisé en ce que** l'étape 3) de surdécharge est réalisée en appliquant à la batterie un courant de surdécharge correspondant à un régime de décharge allant de C/10 à C/200.

14. Procédé selon l'une quelconque des revendications précédentes, **caractérisé en ce que** la batterie au lithium est une batterie LMP dans laquelle la matière active de l'électrode positive est choisie parmi le phosphate de fer et ses dérivés.

**Patentansprüche**

1. Verfahren zur thermischen Behandlung einer Lithiumbatterie, ausgewählt aus den Lithium-Metall-Polymer-Batterien (LMP) und den Lithiumionen-Polymer-Batterien, wobei die Batterie mindestens eine positive Elektrode, mindestens einen Polymerelektrolyten und mindestens eine negative Elektrode aufweist, wobei das Verfahren **dadurch gekennzeichnet ist, dass** es umfasst:

1) mindestens einen ersten Schritt, der darin besteht, die Batterie auf eine Temperatur T1 von mindestens 50 °C zu bringen,
2) mindestens einen zweiten Schritt, bei dem die Batterie auf der Temperatur T1 gehalten wird, bei Anwendung eines Drucks von mindestens 0,5 bar, wobei die Dauer von Schritt 2) 5 Stunden bis 1 Woche beträgt, wobei der Schritt 2) unter Spannung durchgeführt wird und die Batterie in potentiostatischer Aufrechterhaltung in eine Spannung versetzt wird, die dem ursprünglichen Ladezustand der Batterie nach ihrer Montage, plus oder minus 10 %, entspricht,

wobei die Schritte 1) und 2) vor dem ersten Laden der Batterie durchgeführt werden.

**2.** Verfahren nach Anspruch 1, **dadurch gekennzeichnet, dass** die Temperatur T1 50 bis 120 °C beträgt.

**3.** Verfahren nach Anspruch 1 oder 2, **dadurch gekennzeichnet, dass** die Temperatur T1 70 bis 105 °C beträgt.

**4.** Verfahren nach einem der vorangehenden Ansprüche, **dadurch gekennzeichnet, dass** bei Schritt 2) der auf die Batterie ausgeübte Druck 0,5 bis 10 bar beträgt.

**5.** Verfahren nach einem der vorangehenden Ansprüche, **dadurch gekennzeichnet, dass** bei Schritt 2) der auf die Batterie ausgeübte Druck 1 bis 7 bar beträgt.

**6.** Verfahren nach einem der vorangehenden Ansprüche, **dadurch gekennzeichnet, dass** die Dauer von Schritt 2) 5 bis 72 Stunden beträgt.

**7.** Verfahren nach einem der vorangehenden Ansprüche, **dadurch gekennzeichnet, dass** die Dauer von Schritt 2) 5 bis 25 Stunden beträgt.

**8.** Verfahren nach einem der vorangehenden Ansprüche, **dadurch gekennzeichnet, dass** die Batterie in potentiostatischer Aufrechterhaltung in eine Spannung versetzt wird, die dem ursprünglichen Ladezustand der Batterie nach ihrer Montage, plus oder minus 2 %, entspricht.

**9.** Verfahren nach einem der vorangehenden Ansprüche, **dadurch gekennzeichnet, dass** es ferner einen Schritt 3) des Überentladens der Batterie umfasst.

**10.** Verfahren nach Anspruch 9, **dadurch gekennzeichnet, dass** es auf eine LMP-Batterie angewendet wird.

**11.** Verfahren nach Anspruch 9 oder 10, **dadurch gekennzeichnet, dass** der Schritt 3) des Überentladens der Batterie durchgeführt wird, bis die Batterie 2 bis 40 % ihrer Nennkapazität überentladen ist.

**12.** Verfahren nach Anspruch 9 bis 11, **dadurch gekennzeichnet, dass** der Schritt 3) des Überentladens der Batterie durchgeführt wird, bis die Batterie 8 bis 20 % ihrer Nennkapazität überentladen ist.

**13.** Verfahren nach einem der Ansprüche 9 bis 12, **dadurch gekennzeichnet, dass** der Schritt 3) des Überentladens durch Anlegen an die Batterie eines Überentladestroms durchgeführt wird, der einem Entladevorgang von C/10 bis C/200 entspricht.

**14.** Verfahren nach einem der vorangehenden Ansprüche, **dadurch gekennzeichnet, dass** die Lithiumbatterie eine LMP-Batterie ist, in welcher die aktive Materie der positiven Elektrode aus dem Eisenphosphat und seinen Derivaten ausgewählt ist.

**Claims**

**1.** Method for thermally treating a lithium battery selected from among Lithium-Metal-Polymer (LMP) and Lithium-ion Polymer batteries, said battery comprising at least one positive electrode, at least one polymer electrolyte and at least one negative electrode, said method being **characterized in that** it comprises:

1) at least one first step to bring said battery to a temperature T1 of at least 50 °C;
2) at least one second step at which said battery is held at temperature T1 whilst applying a pressure of at least 0.5 bar, step 2) lasting a time of 5 hours to 1 week, said step 2) being carried out while the battery is powered and potentiostatically held at a voltage corresponding to the initial charge state of the battery after assembly thereof to within 10 %;

said steps 1) and 2) being conducted before the first charging of said battery.

2. The method according to claim 1, **characterized in that** temperature T1 is from 50 to 120 °C.

3. The method according to claim 1 or 2, **characterized in that** temperature T1 is from 70 to 105 °C.

4. The method according to any of the preceding claims, **characterized in that** at step 2) the pressure applied to the battery is from 0.5 to 10 bar.

5. The method according to any of the preceding claims, **characterized in that** at step 2) the pressure applied to the battery is from 1 to 7 bar.

6. The method according to any of the preceding claims, **characterized in that** step 2) lasts a time of 5 to 72 hours.

7. The method according to any of the preceding claims, **characterized in that** step 2) lasts a time of 5 to 25 hours.

8. The method according to any of the preceding claims, **characterized in that** the battery is potentiostatically held at a voltage corresponding to the initial charge state of said battery after assembly thereof to within 2 %.

9. The method according to any of the preceding claims, **characterized in that** it also comprises a step 3) to over-discharge said battery.

10. The method according to claim 9, **characterized in that** it is applied to an LMP battery.

11. The method according to claim 9 or 10, **characterized in that** the over-discharge step 3) of the battery is conducted until the battery is over-discharged to 2 to 40 % of its rated capacity.

12. The method according to any of claims 9 to 11, **characterized in that** step 3) to over-discharge the battery is conducted until the battery is over-discharged to 8 to 20 % of its rated capacity.

13. The method according to any of claims 9 to 12, **characterized in that** the over-discharge step 3) is conducted by applying to the battery an over-discharge current corresponding to a discharge rate in the range of C/10 to C/200.

14. The method according to any of the preceding claims, **characterized in that** the lithium battery is an LMP battery in which the active material of the positive electrode is selected from among iron phosphate and derivatives thereof.

# FIGURE 1

# FIGURE 2

# FIGURE 3

# FIGURE 4

## 4a

**4b**

**FIGURE 5**

# FIGURE 6

# FIGURE 7

**7a**

**7b**

**RÉFÉRENCES CITÉES DANS LA DESCRIPTION**

**Documents brevets cités dans la description**

- US 20140197799 A
- US 2005000086 A1
- US 2004229118 A1
- US 2002164531 A1
- US 2015311490 A1
- US 2015270523 A1
- US 2004023114 A1
- JP 2013097993 A